# EUROPEAN PATENT SPECIFICATION

(11) **EP 2 120 399 B1**
(45) Date of publication and mention of the grant of the patent: **06.07.2011**
(21) Application number: 09159476.2
(22) Date of filing: 06.05.2009
(51) Int. Cl.: H04L 12/28, H04L 12/12

(54) **Network device adapted to recognize a server in the network**
Netzwerkvorrichtung, die dafür angepasst ist, einen Server im Netzwerk zu erkennen
Dispositif de réseau adapté pour reconnaître un serveur dans le réseau

(30) Priority: 13.05.2008 JP 2008126438
(43) Date of publication of application: 18.11.2009
(73) Proprietor: Funai Electric Co., Ltd., Daito-shi, Osaka 574-0013 (JP)
(72) Inventor: Yoshioka, Shinji, Osaka 574-0013 (JP)
(74) Representative: Grünecker, Kinkeldey, Stockmair & Schwanhäusser Anwaltssozietät

(56) References cited:
- EP-A- 0 835 037
- WO-A-2007/078081
- US-A1- 2007 112 859

## Description

### BACKGROUND OF THE INVENTION

### 1. Field of the Invention

The present invention relates a network device, and more particularly to a network device which can recognize a server immediately after the network device is connected to the server via a LAN cable.

### 2. Description of the Related Art

A network device such as DMP (Digital Media Player) is known which can be connected to a server via a network cable such as LAN (Local Area Network) cable (or simply network cable). When connected via a LAN cable to a server storing content, the network device obtains content data such as images from the server, and can reproduce the obtained content data. The network device is contained in a housing, and comprises a LAN jack provided exposed outside of the housing, and a control microcomputer for recognizing the server connected thereto via the LAN cable connected to the LAN jack, in which the control microcomputer recognizes the server at predetermined intervals. Thus, the network device has a problem that the network device does not recognize the server immediately after the LAN cable is connected to the LAN jack.

Another network device is known which comprises, in addition to configuration of the above-described network device, a memory for storing a list of servers connected via a LAN cable (such list being hereafter referred to as "server list"). By allowing a user to operate and command refreshing of the server list after the LAN cable is connected to the LAN jack, the network device can recognize a server immediately after the network device is connected to the server via the LAN cable. However, the network device requires the user to operate and command the refreshing of the server list each time the LAN cable is connected to the LAN jack, so that there is a problem that the user is required to spend time and labor.

There are various other network devices. For example, Japanese Laid-open Patent Publication. JP-2005101687 discloses a network device using an access controller such that when a LAN cable is connected or disconnected to/from a LAN jack, causing a state change of the network device, the access controller detects the state change, and that the detected state change can be notified to a control microcomputer. This network device is designed to automatically select an appropriate connection terminal in response to the detection of the connection or disconnection of the LAN cable, but is not designed to recognize a server connected thereto via the LAN cable immediately after the network device is connected to the server via the LAN cable. Thus, this network device does not solve the above-described problem.

On the other hand, Japanese Laid-open Patent Publication JP-2004 222044 discloses a network device which detects usable LAN devices, and manages the usable LAN devices by an operation system. Further, Japanese Laid-open Patent Publication JP-2003 122 458 discloses a network device which can control a power source for e.g. a LAN controller using, as a trigger, a change in the signal output from a detection circuit of a LAN cable connector. However, similarly as in the network system of the first patent publication, none of these network devices of the latter patent publications is designed to recognize a server connected thereto via a LAN cable immediately after the network device is connected to the server via the LAN cable. Thus, these network devices do not solve the problem either.

Patent document WO 2007/078081 relates to a method for providing information for power management of devices connected to a network. The method creates a power management server list which includes, for at least one power management server, a pair of friendly names including a friendly name allocated to the power management server and displays for the at least one power management server, the other friendly name of the pair of friendly names, for instance, a friendly name allocated to an AV media server or an AV device instead of one friendly name allocated to the power management server in the event that information included in the created power management server list is provided to a user.

Patent document US 2007/0112859 relates to a method for enabling the container system for UPnP device that do not support search capabilities. The method includes the step of detecting whether a first server exists. In the next step the method determines the first server search capability. If the server has search capability, the method then determines whether the first server has a known container organisation. If not, the method harvests metadata from the first server and stores the metadata in a database of a device having a second server.

### SUMMARY OF THE INVENTION

An object of the present invention is to provide a network device which can recognize a server immediately after the network device is connected to the server via a LAN cable (network cable), and which can reduce time and labor of a user.

According to the present invention, this object is achieved by a network device to be connected to a server via a network, comprising: a cable connecting unit to be connected to a network cable for connection to the network; a network controller for sending/receiving signals to/from the cable connecting unit and for detecting whether the network cable is connected to the cable connecting unit; control means for recognizing a server connected to the network; and a signal transmission line for sending, from the network controller to the control means, a detection signal indicating that the network cable is connected to the cable connecting unit. When the network controller detects that the network cable is connected to the cable connecting unit, the network controller sends the detection signal as an interrupt signal to the control means via the signal transmission line. Further, when the control means receives the interrupt signal from the network controller, the control means performs a process to recognize the server connected to the network.

According to the network device of the present invention, the control means can recognize the server immediately after the network cable is connected to the cable connecting unit, and hence immediately after the network device is connected to the server-via the network cable. Further, since the control means automatically recognizes the server, a user is not required to perform an operation (such as server list refreshing) to recognize the server (e.g. each time the network cable is connected to the cable connecting unit), thereby reducing time and labor of the user.

Preferably, the network cable is a LAN (Local Area Network) cable, and the network controller is an Ethernet controller.

While the novel features of the present invention are set forth in the appended claims, the present invention will be better understood from the following detailed description taken in conjunction with the drawings.

### BRIEF DESCRIPTION OF THE DRAWINGS

The present invention will be described hereinafter with reference to the annexed drawings. It is to be noted that all the drawings are shown for the purpose of illustrating the technical concept of the present invention or embodiments thereof, wherein:
FIG. 1 is a schematic block diagram of a network system including a DMP according to an embodiment of the present-invention and a server;
FIG. 2 is a schematic block diagram of the DMP, showing its inner structure;
FIG 3 is a schematic block diagram showing a connection between a control unit and a network interface unit of the DMP;
FIG 4 is a schematic block diagram showing a connection between a CPU and an Ethernet controller of the DMP; and
FIG 5 is a flow chart showing a server recognition process to be performed by the DMP to recognize the server.

### DESCRIPTION OF THE PREFERRED EMBODIMENTS

Embodiments of the present invention, as best mode for carrying out the invention, will be described hereinafter with reference to the drawings. The present invention relates to a network device. It is to be understood that the embodiments described herein are not intended as limiting, or encompassing the entire scope of, the present invention. Note that like parts are designated by like reference numerals, characters or symbols throughout the drawings.

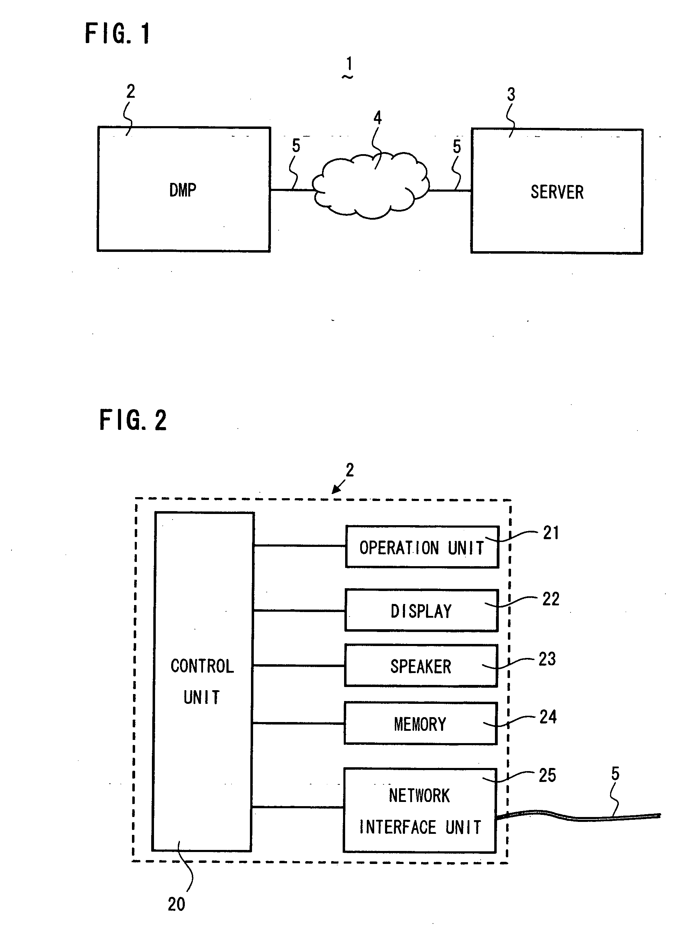

Referring to FIG. 1 and FIG 2, a DMP (Digital Media Player corresponding to claimed "network device") 2 according to an embodiment of the present invention will be described. FIG. 1 is a schematic block diagram of a network system 1 including a DMP 2 and a server 3. On the other hand, FIG 2 is a schematic block diagram of the DMP 2, showing its inner structure. The DMP 2 and the server 3 can be connected to a network 4 via a LAN (Local Area Network) cable 5. The DMP 2 can reproduce content such as images (video) and audio. The server 3 can record data of content (hereafter referred to as "content data") such as images and audio, and can send and receive the recorded content data via the network 4. Examples of the network 4 are an internet network, a home network, and so on.

As shown in FIG. 2, the DMP 2 comprises: an operation unit 21 to be operated by a user for commanding respective units and elements of the DMP 2; a display 22 for displaying e.g. images of content; and a speaker for outputting e.g. audio of the content. The DMP 2 -further comprises: a network interface unit 25 connected to the network 4 (refer to FIG. 1) for receiving e.g. content data from the server 3; a control unit 20 for controlling respective units and elements of the DMP 2 and for recognizing the server 3 connected via the network 4 to the DMP 2; and a memory 24 for storing the content data such as images, a list (hereafter referred to as "server list") describing servers including the server 3 connected via the network 4 to the DMP 2, a program for operating the control unit 20, and so on. The servers described in the server list are those recognized by the control unit 20.

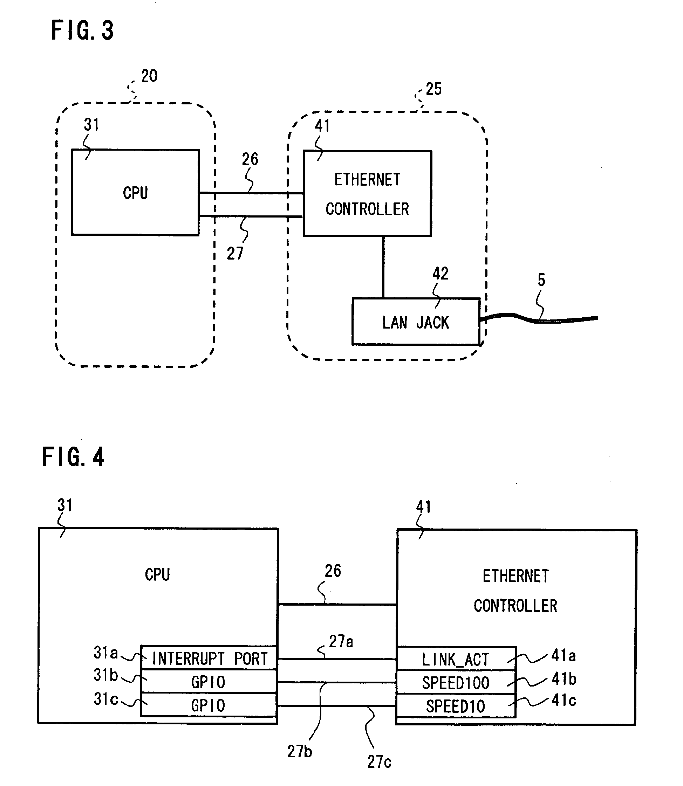

Next, referring to FIG. 3 which is a schematic block diagram showing a connection between the control unit 20 and the network interface unit 25, details of such connection will be described. The control unit 20 is formed e.g. of a CPU (Central Processing Unit) 31, which performs various operations or calculations and controls respective units and elements of the DMP 2, and which thus can be referred to as "control means" (as claimed). The network interface unit 25 is formed of: a LAN jack (claimed "cable connecting unit") 42 to be connected (or attached) to the LAN cable 5 for connecting the DMP 2 to the network 4; an Ethernet (registered trademark) controller (claimed "network controller") 41; and so on.

The LAN cable 5 to be connected to the LAN jack 42 is in accordance with 10Base-T Standard (IEEE 802.3) to enable communication at a speed of 10 Mbps (Mega bits per second), or 100Base-T standard (IEEE 802.3u) to enable communication at a speed of 100 Mbps, or the like. The Ethernet controller 41 performs various processings such as sending/receiving signals to/from the LAN jack 42, packet processing, detection of connection or disconnection of the LAN cable 5 to/from the LAN jack 42, sending/receiving various signals to/from the CPU 31, and so on. The CPU 31 and the Ethernet controller 41 are connected to each other via a PCI (Peripheral Component Interconnect) bus 26 and signal transmission lines 27 (27a, 27b, 27c). The Ethernet controller 41 can send to the CPU 31 a detection signal or signals indicating that the LAN cable 5 is connected to the LAN jack 42. Details of the process of sending the detection signal will be described later. In the packet processing, the Ethernet controller 41 receives packets from the server 3 (if connected) so as to perform various operations such as determining whether the Ethernet controller 41 (DMP 2) is in the state of being able to normally communicate with the server 3, and determining whether to communicate with the server 3 at a speed of 10 Mbps or 100 Mbps.

Referring now to FIG. 4 which is a schematic block diagram showing a connection between the CPU 31 and the Ethernet controller 41, details of such connection will be described. The CPU 31 has an interrupt port 31a and GPIO (General Purpose Input/Output) ports 31 b and 31c. When the interrupt port 31a receives a signal, the CPU 31 interrupts the currently running process, and performs an instruction process based on the signal received by the interrupt port 31a to recognize the server 3 connected to the CPU 31 (DMP 1) as also described later. On the other hand, the Ethernet controller 41 has a Link_ACT terminal 41a, a SPEED100 terminal 41b and a SPEED10 terminal 41c. The Ethernet controller 41 outputs a low level signal (hereafter referred to as "Low signal") and a high level signal (hereafter referred to as "High signal") to the CPU 31 through the Link_ACT terminal 41a, respectively, when the Ethernet controller 41 determines that the Ethernet controller 41 is in the state of being able and unable to normally communicate with the server 3, respectively. The Link_ACT terminal 41a is connected to the interrupt port 31a of the CPU 31 by the signal transmission line 27a.

The Ethernet controller 41 outputs a Low signal and a High signal to the CPU 31 through the SPEED100 terminal 41b, respectively, when the Ethernet controller 41 allows and does not allow communication with the server 3 at a speed of 100 Mbps, respectively, via the LAN cable 5 connected to the LAN jack 42. The SPEED100 terminal 41b is connected to the GPIO port 31 b of the CPU 31 by the signal transmission line 27b. Similarly, the Ethernet controller 41 outputs a Low signal and a High signal to the CPU 31 through the SPEED 10 terminal 41c, respectively, when the Ethernet controller 41 allows and does not allow communication with the server 3 at a speed of 10 Mbps, respectively, via the LAN cable 5 connected to the LAN jack 42. The SPEED 10 terminal 41c is connected to the GPIO port 31c of the CPU 31 by the signal transmission line 27c.

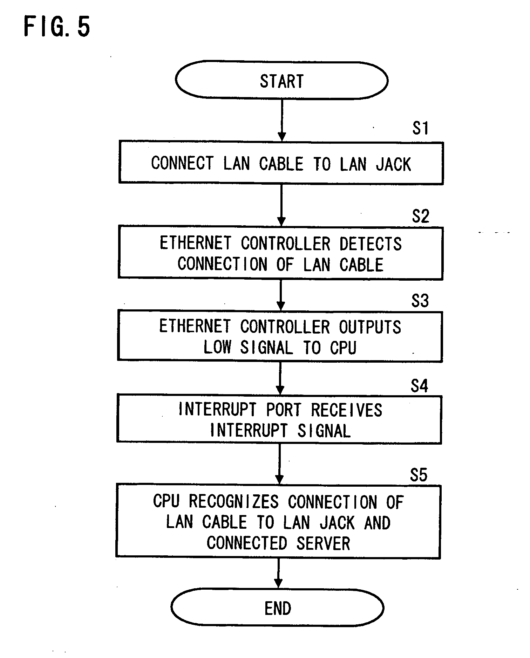

Next, referring to FIG. 5 which is a flow chart showing- a server recognition process to be performed by the DMP 2 to recognize the server 3, the server recognition process will be described. Here, it is assumed that the DMP 2 is in the state of being able to communicate with the serve 3 via the network 4 with the LAN cable 5 being connected to the LAN jack 42. It is also assumed that LAN cable 5 is capable of communication at a speed of 100 Mbps. First, when the LAN cable 5 is connected to the LAN jack 42 by a user (S1), the Ethernet controller 41 detects that the LAN cable 5 has been connected and is connected to the LAN jack 42 (S2).

When the Ethernet controller 41 detects the connection of the LAN cable 5 to the LAN jack 42, the Ethernet controller 41 outputs a Low signal (claimed "detection signal"), as an interrupt signal, to the interrupt port 31a of the CPU 31 through the Link_ACT terminal 41a via the signal transmission line 27a, while outputting a Low signal to the GPIO port 31 b of the CPU 31 through the SPEED 100 terminal 41 b via the signal transmission line 27b (S3). When the interrupt signal output in step S3 is received by the interrupt port 31a (S4), the CPU 31 recognizes that the LAN cable 5 is connected to the LAN jack 42, and also recognizes the server 3 connected to the DMP 2 via the network 4 (S5). More specifically, the CPU 31 is designed to perform a process (instruction process) such that the reception of the interrupt signal by the interrupt port 31a allows the CPU 31 to recognize the connection of the LAN cable 5 to the LAN jack 42 and also to recognize the server connected to the CPU 31 (DMP 2). Note that the CPU 31 can be designed to describe, in step S5, the recognized server 3 in the server list.

As described in the foregoing, the DMP 2 according to the present embodiment has a feature that when the LAN cable 5 is connected to the LAN jack 42, the Ethernet controller 41 sends (i.e. outputs), to the interrupt port 31a of the CPU 31, a Low signal as an interrupt signal via the signal transmission line 27a, while the CPU 31 having received the interrupt signal recognizes the server 3 connected to the DMP 2 via the network 4. Thus, the CPU 31, and hence the DMP 2, can recognize the server 3 immediately after the LAN cable 5 is connected to the LAN jack 42, and hence immediately after the DMP 2 is connected to the server 3 via the LAN cable 5. Further, since the CPU 31 automatically recognizes the server 3 in the manner described above, a user is not required to perform an operation (such as server list refreshing) to recognize the server 3 (e.g. each time the LAN cable 5 is connected to the LAN jack 42), thereby reducing time and labor of the user.

It is to be noted that the present invention is not limited to the above-described embodiment, and various modifications are possible within the scope of the claim. For example, in the embodiment described above, the signal transmission line 27a is connected to the interrupt port 31a of the CPU 31. However, the CPU 31 can be designed so that the signal transmission line 27a is to be connected to a GPIO terminal of the CPU 31. In addition, the embodiment described above shows a case in which one server 3 is connected to the DMP 2 via the network 4. However, the DMP 2 can be designed to be connected to an arbitrary number of servers.

The present invention has been described above using presently preferred embodiments, but such description should not be interpreted as limiting the present invention. Various modifications will become obvious, evident or apparent to those ordinarily skilled in the art, who have read the description. Accordingly, the appended claims should be interpreted to cover all modifications and alterations which fall within the scope of the present invention.

This application is based on Japanese patent application 2008-126438 filed May 13, 2008.

## Claims

1. A network device to be connected to a server (3) via a network (4), comprising:
a cable connecting unit (42) to be connected to a network cable (5) for connection to the network (4);
a network controller (41) for sending/receiving signals to/from the cable connecting unit (42) and for detecting whether the network cable (5) is connected to the cable connecting unit (42);
control means (20) for recognizing a server (3) connected to the network (4);
and a signal transmission line (27a) for sending, from the network controller (41) to the control means (20), a detection signal indicating that the network cable (5) is connected to the cable connecting unit (42),
wherein when the network controller (41) detects that the network cable (5) is connected to the cable connecting unit (42), the network controller (41) is adapted to send the detection signal as an interrupt signal to the control means (20) via the signal transmission line (27a), and
wherein when the control means (20) receives the interrupt signal from the network controller (41), the control means (20) is adapted to perform a process to recognize the server (3) connected to the network (4).

2. The network device according to claim 1,
wherein the network cable (5) is a LAN (Local Area Network) cable, and the network controller (41) is an Ethernet controller.

## Patentansprüche

1. Netzwerkvorrichtung zur Verbindung mit einem Server (3) über ein Netzwerk (4), die umfasst:
eine Kabelverbindungseinheit (42), die mit einem Netzwerkkabel (5) zur Verbindung mit dem Netzwerk (4) zu verbinden ist;
einen Netzwerk-Controller (41), mit dem Signale zu/von der Kabelverbindungseinheit (42) gesendet/empfangen werden und mit dem erfasst wird, ob das Netzwerkkabel (5) mit der Kabelverbindungseinheit (42) verbunden ist;
eine Steuereinrichtung (20) zum Erkennen eines mit dem Netzwerk (4) verbundenen Servers (3);
und eine Signalübertragungsleitung (27a) zum Senden eines Erfassungssignals, das anzeigt, dass das Netzwerkkabel (5) mit der Kabelverbindungseinheit (42) verbunden ist, von dem Netzwerk-Controller (41) zu der Steuereinrichtung (20),
wobei der Netzwerk-Controller (41) so eingerichtet ist, dass er, wenn der Netzwerk-Controller (41) erfasst, dass das Netzwerkkabel (5) mit der Kabeiverbindungseinheit (42) verbunden ist, das Erfassungssignal als ein Interrupt-Signal über die Signalübertragungsleitung (27a) zu der Steuereinrichtung (20) sendet, und
die Steuereinrichtung (20) so eingerichtet ist, dass sie, wenn die Steuereinrichtung (20) das Interrupt-Signal von dem Netzwerk-Controller (41) empfängt, einen Prozess zum Erkennen des mit dem Netzwerk (4) verbundenen Servers (3) durchführt.

2. Netzwerkvorrichtung nach Anspruch 1,
wobei das Netzwerkkabel (5) ein LAN-Kabel (Local Area Network cable) ist und der Netzwerk-Controller (41) ein Ethernet-Controller ist.

## Revendications

1. Dispositif de réseau à connecter à un serveur (3) par l'intermédiaire d'un réseau (4), comprenant :
une unité de connexion de câble (42) à connecter à un câble de réseau (5) en vue de la connexion au réseau (4) ;
un contrôleur de réseau (41) pour émettre/recevoir des signaux vers/à partir de l'unité de connexion de câble (42) et pour détecter la connexion ou non du câble de réseau (5) à l'unité de connexion de câble (42) ;
des moyens de commande (20) pour reconnaître un serveur (3) connecté au réseau (4) ;
et une ligne de transmission de signaux (27a) pour émettre, du contrôleur de réseau (41) vers les moyens de commande (20), un signal de détection indiquant que le câble de réseau (5) est connecté à l'unité de connexion de câble (42),
étant précisé que le contrôleur de réseau (41), quand il détecte la connexion du câble de réseau (5) à l'unité de connexion de câble (42), est apte à émettre le signal de détection comme signal d'interruption aux moyens de commande (20) par l'intermédiaire de la ligne de transmission de signaux (27a), et
que les moyens de commande (20) quand ils reçoivent le signal d'interruption provenant du contrôleur de réseau (41), les moyens de commande (20) sont aptes à exécuter une opération pour reconnaître le serveur (3) connecté au réseau (4).

2. Dispositif de réseau selon la revendication 1, dans lequel le câble de réseau (5) est un câble LAN (réseau local) et le contrôleur de réseau (41) est un contrôleur Ethernet.
